# EUROPEAN PATENT APPLICATION

(11) **EP 4 435 879 A1**
(43) Date of publication of application: **25.09.2024**
(21) Application number: 24150159.2
(22) Date of filing: 03.01.2024
(51) Int. Cl.: H01M 4/04, H01M 4/139, H01M 4/36, H01M 10/04, H01M 10/0587

(54) **METHOD FOR PRODUCING POWER STORAGE DEVICE**

(30) Priority: 21.03.2023 JP 2023044820
(71) Applicant: Prime Planet Energy & Solutions, Inc., Chuo-ku Tokyo 103-0022 (JP)
(72) Inventor: YOSHIOKA, Masahiro, Tokyo, 103-0022 (JP)
(74) Representative: Kuhnen & Wacker Patent- und Rechtsanwaltsbüro PartG mbB

(57) **Abstract**

A method for producing a power storage device (1) includes an electrolytic solution (6) containing ethylene carbonate (6VE) and a solvent (6VL) having a lower melting point than that of the ethylene carbonate (6VE), a wound-type electrode body (2), and a case (7). The electrode body (2) includes a negative active material layer (4A) having a width dimension (AW) of 180 mm or larger. The method includes an injecting step (S3) to inject the electrolytic solution (6) into the case (7) housed therein with a to-be-permeated electrode body (12), a waiting step (S4) to wait for lapse of a predetermined waiting time (TT), and an initial charging step (S5). A to-be-permeated electrode body forming step (S 1) is a step of forming the to-be-permeated electrode body (12) placed in advance with a film-forming material (CS) for forming a negative electrode SEI film (4AC) on a negative active material layer (4A) in a center portion (12M) in an axial direction (XH) in the to-be-permeated electrode body (12).

## Description

### BACKGROUND

### Technical Field

The present invention relates to a method for producing a power storage device.

### Related Art

Conventionally, in a power storage device such as a battery including an electrode body and an electrolytic solution inside a case, it has been necessary to consider uneven permeation (uneven impregnation) of the electrolytic solution in the electrode body. For example, Patent Document 1 discloses a method for producing a lithium-ion battery. In the method, before a laminating step of obtaining a lamination unit in which an electrode active material layer (A), a separator, and an electrode active material layer (B) are laminated, at least any one of the separator and the electrode active material layer (B) is made to contain the electrolytic solution, whereby uneven permeation of the electrolytic solution is prevented or inhibited.

### Related Art Documents

### Patent Documents

Patent Document 1: JP2019-212464A

### SUMMARY

### Technical Problems

However, as described in Patent Document 1, when a wound electrode body is to be used instead of using the lamination unit, that is, a laminated electrode body, it is necessary to handle a strip-shaped separator impregnated with an electrolytic solution or a strip-shaped electrode plate impregnated with an electrolytic solution, and thus the handling is difficult.

On the other hand, as a solvent constituting an electrolytic solution for a power storage device, ethylene carbonate (hereinafter, also referred to as EC) for forming an SEI film is used in some cases together with dimethyl carbonate (hereinafter, also referred to as DMC), ethyl methyl carbonate (hereinafter, also referred to as EMC), or the like in order to easily form the SEI film in a negative active material layer during initial charging. For example, this is the case where a mixed solvent of EC, DMC, and EMC may be used as an electrolytic solution.

However, it has been found that, when an electrolytic solution containing EC is caused to permeate an electrode body from an end portion of the electrode body which is not yet permeated with the electrolytic solution, a permeation speed of EC is relatively slow compared to that of DMC, EMC, or a supporting electrolyte such as LiPF₆ dissolved in DMC or EMC. EC has a melting point of 34°C to 37°C, which is relatively high compared to that of DMC (melting point of 2°C to 4°C), EMC (melting point of -53°C), or the like, and also has high viscosity. Thus, it is considered that, when permeating the electrode body through a negative active material layer, a separator, and others, EC is difficult to permeate as compared to DMC and others.

Then, for example, a power storage device includes an electrode body in which an electrolytic solution permeates over a long distance because a strip-shaped electrode plate for use is wide. Among such a power storage device using wound electrode bodies, even when the electrolytic solution is caused to permeate the electrode body from both end portions in an axial direction and to reach the center in the axial direction so that the electrolytic solution can permeate the entire electrode body, EC still cannot sufficiently reach a portion near the center in the axial direction in some cases. That is, at the time of initial charging, unevenness may occur in the amount per unit area of EC existing everywhere in the electrode body (hereinafter, the amount per unit area is also referred to as area density).

If initial charging is performed on the power storage device such as a secondary battery in this state to form a negative electrode SEI film in a negative active material layer, the negative electrode SEI film derived from EC is less formed in a portion near the center in an axial direction of the electrode body where has a low EC content. Thus, it has been found that, in the electrode body, characteristics of the negative active material layer in a portion near the center portion in the axial direction where has a low area density of EC are different from those in portions near both ends in the axial direction where has a high area density of EC. Specifically, a relatively high-resistance negative active material layer is formed in a portion near the center portion in the axial direction where has a low area density of EC. Accordingly, resistance of the entire power storage device is also increased.

The present invention has been made in view of such circumstances, and provides a method for producing a power storage device in which a negative electrode SEI film is inhibited from being formed unevenly in a negative active material layer in a wound electrode body to inhibit increase in resistance.

### Means of Solving the Problems

(1) One aspect of the present invention to solve the above problem is a method for producing a power storage device, the power storage device comprising: an electrolytic solution which contains ethylene carbonate and a solvent having a lower melting point than that of ethylene carbonate; an electrode body of a wound shape in which the electrolytic solution permeates to the inside, the electrode body including a strip-shaped positive electrode plate, a strip-shaped negative electrode plate including a strip-shaped negative active material layer, and strip-shaped separators; and a case housing the electrode body and the electrolytic solution, the electrode body including the negative active material layer having a width dimension of 180 mm or larger, the method comprising: forming a to-be-permeated electrode body of a wound shape, in which the electrolytic solution does not permeate; housing the to-be-permeated electrode body into the case; injecting the electrolytic solution into the case housing the to-be-permeated electrode body; waiting for an elapse of a predetermined waiting time during which the electrolytic solution permeates the entire to-be-permeated electrode body after the injecting; and performing initial charging for forming a negative electrode SEI film in the negative active material layer after the waiting, wherein the forming of the to-be-permeated electrode body is forming the to-be-permeated electrode body in which a film-forming material for forming the negative electrode SEI film in the negative active material layer is disposed in advance in a center portion in an axial direction of the to-be-permeated electrode body.

The power storage device according to this producing method uses the electrolytic solution containing EC. Furthermore, the dimension in a width direction of the strip-shaped negative active material layer is not smaller than 180 mm in the wound electrode body. Thus, as described above, even when the waiting time elapses and the electrolytic solution permeates the entire to-be-permeated electrode body, an initial charging step may be performed in a state in which EC does not sufficiently reach the center portion in the axial direction of the wound electrode body, and thus the negative electrode SEI film may be formed unevenly in the negative active material layer in the electrode body.

However, in the present producing method, the to-be-permeated electrode body, in which the film-forming material for forming the negative electrode SEI film in the negative active material layer is disposed in advance in the center portion in the axial direction, is formed in the forming step of the to-be-permeated electrode body. Thus, even if the initial charging step is performed in a state in which EC derived from the electrolytic solution does not sufficiently reach the center portion in the waiting step, the film-forming material disposed in advance allows the negative electrode SEI film to be appropriately formed. In this manner, the power storage device can be produced in a manner that the negative electrode SEI film is inhibited from being formed unevenly in the negative active material layer in the electrode body so that increase in resistance is inhibited.

Examples of the power storage device include secondary batteries such as a lithium-ion secondary battery and a sodium-ion secondary battery, and a capacitor such as a lithium-ion capacitor. Examples of the wound electrode body include a cylindrical wound electrode body and a flat wound electrode body.

As the electrolytic solution, a nonaqueous electrolytic solution which is obtained by dissolving a supporting electrolyte in an organic solvent can be used. Examples of the organic solvent to be used for the electrolytic solution include, in addition to ethylene carbonate (EC), dimethyl carbonate (DMC), diethyl carbonate (DEC), and ethyl methyl carbonate (EMC), each of which can be mixed with EC to form a mixed solvent and has a melting point lower than that of EC.

Examples of the supporting electrolyte to be contained in the electrolytic solution include lithium salts such as LiBF₄, LiAsF₆, LiPF₆, LiCF₃SO₃, LiN(SO₂CF₃)₂, LiN(SO₂C₂F₅)₂, and LiN(SO₂CF₃)(SO₂C₄F₉). In addition, sodium salts such as NaPF₆ and Na⁺(CF₃SO₂)₂N⁻(NaTFSI) can be contained.

Examples of the film-forming material include vinylene carbonate, fluoroethylene carbonate, and LiBOB, each of which is a material to be used to form the negative electrode SEI films on negative active material particles in the initial charging step in addition to EC that is to be used separately from the electrolytic solution.

As a method for forming the to-be-permeated electrode body in which the film-forming material is disposed in advance in the forming step of the to-be-permeated electrode body, for example, the to-be-permeated electrode body may be formed by using an adjunct negative electrode plate which contains the film-forming material in a center portion in the width direction of the strip-shaped negative active material layer. As another method, the to-be-permeated electrode body may be formed by using an adjunct separator as the strip-shaped separator which contains the film-forming material in a portion facing the center portion in the width direction of the negative active material layer.

(2) In the method for producing the power storage device in the above (1), preferably, the forming of the to-be-permeated electrode body includes forming an adjunct negative electrode plate, in which, in the strip-shaped negative active material layer, a center portion in a width direction is a strip-shaped adjunct negative active material layer containing the film-forming material, and peripheral edge side portions on both sides in the width direction are respectively strip-shaped non-inclusive negative active material layers containing no film-forming material.

In the method for producing the power storage device, the forming step of the to-be-permeated electrode body includes the forming step for forming the adjunct negative electrode plate including the strip-shaped adjunct negative active material layer and the strip-shaped non-inclusive negative active material layers formed on both sides in the width direction of the adjunct negative active material layer. Since the adjunct negative electrode plate formed as above is used, similar to the strip-shaped negative electrode plate in which no adjunct negative active material layer is provided, the wound to-be-permeated electrode body can be formed, and moreover, the film-forming material can be disposed in advance in the to-be-permeated electrode body.

(3) In the method for producing the power storage device in the above (2), preferably, in the forming of the adjunct negative electrode plate, a non-inclusive negative electrode paste, which contains no film-forming material but contains negative active material particles, is used to form the non-inclusive negative active material layer, and an adjunct negative electrode paste, which contains the negative active material particles and the film-forming material, is used to form the adjunct negative active material layer (14AF).

In the method for producing the power storage device, the non-inclusive negative active material layer is formed by using the non-inclusive negative electrode paste, and the adjunct negative active material layer is formed by using the adjunct negative electrode paste in the forming step of the adjunct negative electrode plate. Thus, the adjunct negative electrode plate can be formed at low cost.

As a method for forming the non-inclusive negative active material layer from the non-inclusive negative electrode paste and forming the adjunct negative active material layer from the adjunct negative electrode paste, a method as follows may be adopted. That is, the negative electrode paste, the adjunct negative electrode paste, and the negative electrode paste are applied in this order to the strip-shaped negative current collecting foil so as to form a stripe shape with a die coater using a die including partitions each provided between the part for discharging the adjunct negative electrode paste and each of one side part and the other side part for discharging the negative electrode paste, and then the strip-shaped negative current collecting foil is dried.

In addition, a method for providing a time lag in application of pastes may be used. For example, the adjunct negative electrode paste is applied to the strip-shaped negative current collecting foil so as to form a strip shape, then the negative electrode paste is applied to both sides in the width direction of the adjunct negative electrode paste layer such that each of the both sides has a strip shape, and then the strip-shaped negative current collecting foil is dried.

In the above-described method for producing the power storage device, it is also preferable that the non-inclusive negative active material layer which contains the negative active material particles but does not contain the film-forming material is formed, then a paste containing the film-forming material is applied to the center portion in the width direction of the non-inclusive negative active material layer and dried, and thus the adjunct negative electrode plate including the adjunct negative active material layer is formed in the forming step of the adjunct negative electrode plate.

(4) The method for producing the power storage device in the above (2) or (3), preferably, in the forming of the adjunct negative electrode plate, the center portion away from each of both peripheral edges in the width direction of the strip-shaped negative active material layer by 80 mm or larger is the adjunct negative active material layer.

Due to difference in easiness of permeation between EC and the other solvents, there is a growing tendency that EC comparatively hardly reaches a portion located at a permeation distance of 80 mm or larger along the negative active material layer, and as described above, the negative electrode SEI film derived from EC in the electrolytic solution is less formed. In contrast, in the above producing method, the center portion in the width direction located at the distance of 80 mm or larger from each of the both peripheral edges of the strip-shaped negative active material layer in the wound to-be-permeated electrode body is defined as the adjunct negative active material layer, whereby formation of the negative electrode SEI film can be surely supplemented.

(5) The method for producing the power storage device in any one of the above (1) to (4), preferably, the film-forming material is ethylene carbonate.

In the method for producing the power storage device, the ethylene carbonate as the film-forming material is disposed in advance in a portion which lacks the ethylene carbonate derived from the electrolytic solution, and thus the negative electrode SEI film derived from the ethylene carbonate can be formed in the entire negative active material layer.

### BRIEF DESCRIPTION OF THE DRAWINGS

FIG. 1 is a partially broken perspective view of a battery in an embodiment;
FIG. 2 illustrates a state in which negative electrode SEI films are formed on negative active material particles in a negative active material layer in the embodiment;
FIG. 3 is a perspective view of a flat wound electrode body and a flat wound to-be-permeated electrode body in the embodiment;
FIG. 4 illustrates the flat wound to-be-permeated electrode body in an exploded manner, illustrating a positive electrode plate, a negative electrode plate, and separators in the embodiment;
FIG. 5 is a flowchart of production of the battery in the embodiment;
FIG. 6 illustrates production of the to-be-permeated negative electrode plate in the embodiment;
FIG. 7 illustrates a stripe pattern on a wide negative electrode foil to which a non-inclusive negative electrode paste and an adjunct negative electrode paste are applied with a die coater in the embodiment;
FIG. 8 illustrates a flat wound to-be-permeated electrode body in an exploded manner, illustrating a positive electrode plate, a negative electrode plate, and separators in a first comparative embodiment;
FIG. 9 illustrates a flat wound to-be-permeated electrode body in an exploded manner, illustrating a positive electrode plate, a negative electrode plate, and separators in a second comparative embodiment;
FIG. 10 illustrates examination portions in the electrode body of the battery in the embodiment and the first and second comparative embodiments;
FIG. 11 is a graph indicating a relationship between the examination portions in the electrode body of the battery and a relative content of ethylene carbonate in the embodiment and the first and second comparative embodiments; and
FIG. 12 is a graph indicating a relationship between the examination portions in the electrode body of the battery and a relative IV resistance value in the embodiment and the first and second comparative embodiments.

### DETAILED DESCRIPTION OF THE EXEMPLARY EMBODIMENTS

### Embodiment

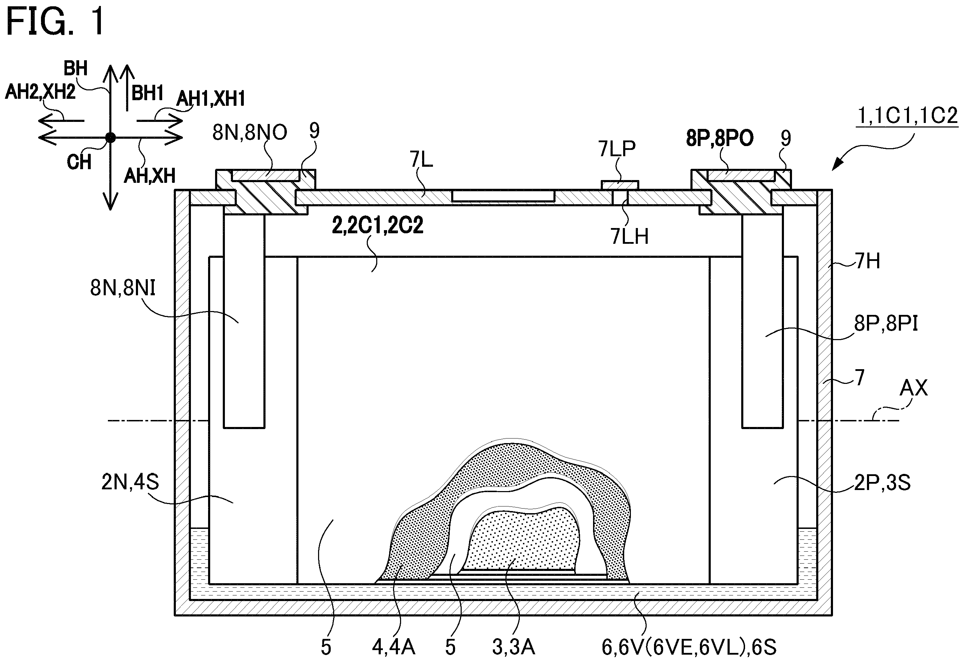

Hereinafter, a battery 1 as one example of a power storage device, which is a lithium-ion secondary battery, and production of the battery 1 according to an embodiment of the present invention will be described with reference to FIGs. 1 to 7. This battery 1 is a rectangular sealed lithium-ion secondary battery, and is mounted in vehicles such as a hybrid car, a plug-in hybrid car, and an electric vehicle, and various equipment.

The battery 1 of the present embodiment includes a case 7, and an electrode body 2 and an electrolytic solution 6 which are housed inside the case 7. The case 7 of a rectangular parallelepiped box-like shape is formed of metal (aluminum in the present embodiment) and includes a case body 7H having a bottomed rectangular tube shape and a lid 7L disposed on an upper side BH1 in a height direction BH. A positive terminal 8P and a negative terminal 8N are fixed to the lid 7L via insulating members 9. A liquid inlet 7LH for injecting the electrolytic solution 6 is drilled in the lid 7L and sealed with a liquid injection plug 7LP after liquid injection. The electrode body 2 is covered with a not-shown bag-shaped insulating film in the case 7. The electrode body 2 is impregnated with a part of the electrolytic solution 6 housed in the case 7, and the remaining part of the electrolytic solution 6 is accumulated on a bottom portion of the case 7.

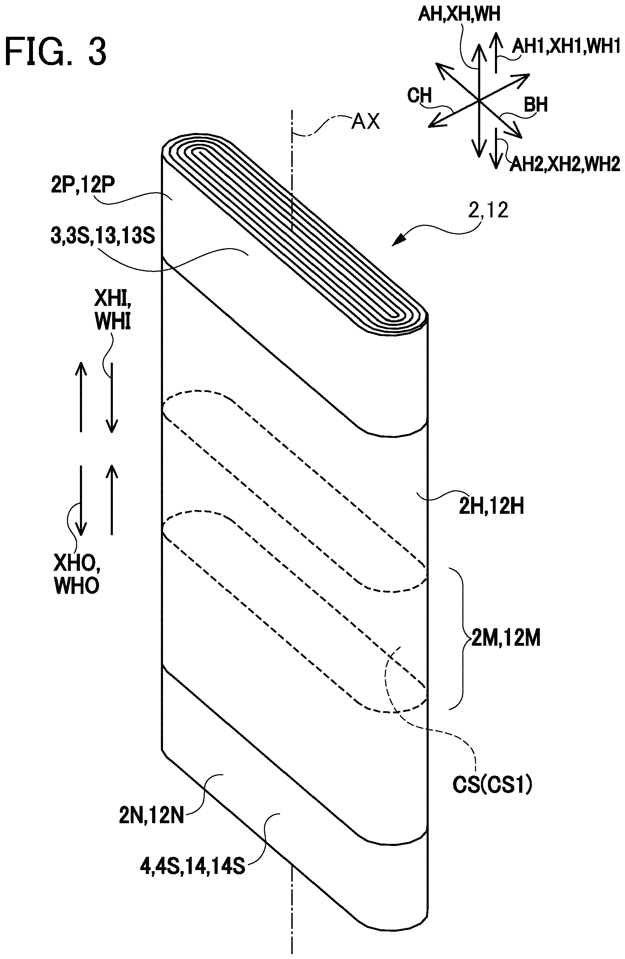

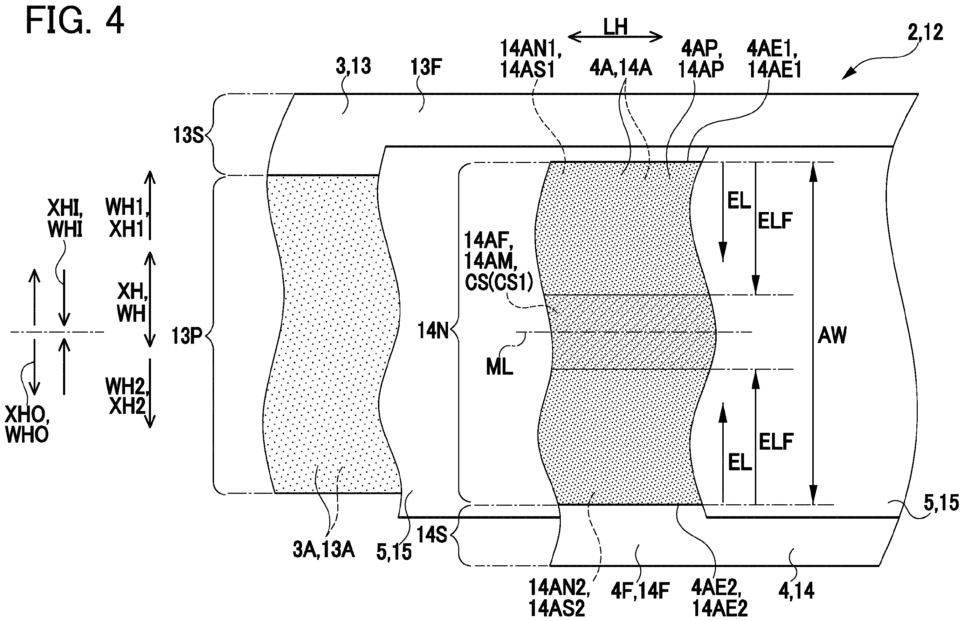

A to-be-permeated electrode body 12 (see FIGs. 3 and 4), which is not yet impregnated with the electrolytic solution 6, is a so-called flat wound electrode body and formed in a flat shape in a thickness direction CH by pressing a strip-shaped to-be-permeated positive electrode plate 13 and a strip-shaped to-be-permeated negative electrode plate 14 (one example of an adjunct negative electrode plate) and winding those plates via a pair of strip-shaped to-be-permeated separators 15. Thus, the electrode body 2 (see FIGs. 1, 3, and 4), which is housed in the case 7 and in which the to-be-permeated electrode body 12 is impregnated with the electrolytic solution 6, is also formed in a flat shape in the thickness direction CH orthogonal to the sheet in FIG. 1 by thinning a strip-shaped positive electrode plate 3 and a strip-shaped negative electrode plate 4, each of which is impregnated with the electrolytic solution 6 and both of which are wound via the pair of strip-shaped separators 5. The electrode body 2 is laid sideways and is housed in the case 7 such that a winding axis AX coincides with a width direction AH (that is, a right-left direction in FIG. 1).

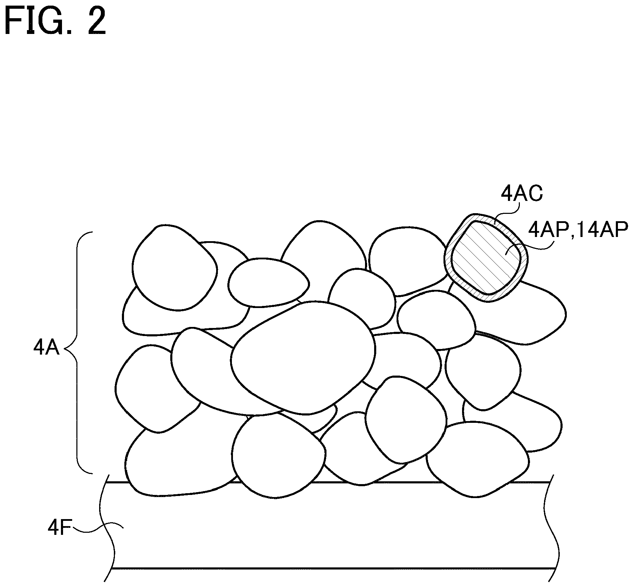

As described below, the electrode body 2 in the battery 1 is obtained by causing the electrolytic solution 6 to permeate the to-be-permeated electrode body 12 housed in the case 7 and by performing initial charging thereon. Thus, as shown in FIG. 2, negative electrode SEI films 4AC derived from an ethylene carbonate 6VE as a solvent and a lithium salt 6S, which are contained in the electrolytic solution 6, are formed on peripheries of negative active material particles 4AP forming a negative active material layer 4A formed on a negative electrode foil 4F of the electrode body 2. The formed negative electrode SEI films 4AC enable the battery 1 to be stably charged and discharged with low resistance as compared to a case where no negative electrode SEI film 4AC is formed.

On one side XH1 (corresponding to one side AH1 in the width direction AH of the battery 1 in the present embodiment, and the upper side in FIG. 3) in an axial direction XH along a winding axis AX of the flat-wound electrode body 2 and the flat-wound to-be-permeated electrode body 1, positive current collecting parts 2P, 12P, in which current collecting parts 3S, 13S of the positive electrode plate 3 and the to-be-permeated positive electrode plate 13 are wound respectively, are provided. On the contrary, on the other side XH2 (corresponding to the other side AH2 in the width direction AH of the battery 1 in the present embodiment, and the lower side in FIG. 3) in the axial direction XH, negative current collecting parts 2N, 12N, in which current collecting parts 4S, 14S of the negative electrode plate 4 and the to-be-permeated negative electrode plate 14 are wound respectively, are provided. A portion between the positive current collecting part 2P and the negative current collecting part 2N is a main body 2H in which the positive electrode plate 3 and the negative electrode plate 4 are wound with the separators 5 interposed therebetween, or a portion between the positive current collecting part 12P and the negative current collecting part 12N is a main body 12H in which the to-be-permeated positive electrode plate 13 and the to-be-permeated negative electrode plate 14 are wound with the to-be-permeated separators 15 interposed therebetween.

The positive terminal 8P is formed of an aluminum plate bent and formed in a predetermined shape. An inside connection portion 8PI forming one end portion of the positive terminal 8P is connected to the positive current collecting part 2P disposed on the one side AH1 in the width direction AH of the electrode body 2. On the other hand, the other end portion of the positive terminal 8P is drawn out of the case 7, specifically, drawn out on the lid 7L to form an outer terminal portion 8PO. The negative terminal 8N is formed of a copper plate bent and formed in a predetermined shape. An inside connection portion 8NI forming one end portion of the negative terminal 8N is connected to the negative current collecting part 2N disposed on the other side AH2 in the width direction AH of the electrode body 2. On the other hand, the other end portion of the negative terminal 8N is drawn out of the case 7, specifically, drawn out on the lid 7L to form an outer terminal portion 8NO.

The electrolytic solution 6 is a nonaqueous electrolytic solution containing an organic solvent 6V and a lithium salt 6S (one example of a supporting electrolyte). In the present embodiment, as the organic solvent 6V, an organic solvent obtained by mixing the ethylene carbonate (EC) 6VE with dimethyl carbonate (DMC) and ethyl methyl carbonate (EMC) as another solvent 6VL at a weight ratio of 3:4:3 is used. In addition, LiPF₆ is used as the lithium salt 6S. The concentration of LiPF₆ in the electrolytic solution 6 is 1.1 mol/L.

As shown in FIG. 4, the strip-shaped to-be-permeated positive electrode plate 13 of the to-be-permeated electrode body 12 includes a positive electrode foil 13F formed of an aluminum foil and positive active material layers 13A laminated on both surfaces of the positive electrode foil 13F. Each positive active material layer 13A contains positive active material particles, conductive particles, and a binder which are not shown. In the present embodiment, lithium transition metal composite oxide particles, specifically, lithium nickel cobalt manganese composite oxide particles are used as the positive active material particles, for example. Acetylene black (AB) particles are used as the conductive particles, for example. Polyvinylidene fluoride (PVDF) is used as the binder, for example. An end portion on one side WH1 (the upper side in FIG. 4) in the width direction WH of the strip-shaped to-be-permeated positive electrode plate 13 is a current collecting part 13S in which no positive active material layer 13A is disposed on the positive electrode foil 13F so that the positive electrode foil 13F is exposed. On the other hand, the remaining part of the to-be-permeated positive electrode plate 13 is a positive electrode part 13P in which the positive active material layers 13A are laminated on the both surfaces of the positive electrode foil 13F. As can be understood from FIGs. 3 and 4, the width direction WH (the upper and lower direction in FIG. 4) of the to-be-permeated positive electrode plate 13 and others coincides with the axial direction XH, and the one side WH1 coincides with the one side XH1.

On the other hand, the strip-shaped to-be-permeated negative electrode plate 14 of the to-be-permeated electrode body 12 includes a negative electrode foil 14F formed of a copper foil and negative active material layers 14A laminated on both surfaces of the negative electrode foil 14F. Each negative active material layer 14A is formed of negative active material particles 14AP and a binder (not shown). In the present embodiment, graphite particles are used as the negative active material particles 14AP. Carboxymethyl cellulose (CMC) is used as the binder, for example. An end portion on the other side WH2 (the lower side in FIG. 4) in the width direction WH of the strip-shaped to-be-permeated negative electrode plate 14 is a current collecting part 14S in which no negative active material layer 14Ais disposed on the negative electrode foil 14F so that the negative electrode foil 14F is exposed. On the other hand, the remaining part of the to-be-permeated negative electrode plate 14 is a negative electrode part 14N in which the negative active material layers 14A are laminated on the both surfaces of the negative electrode foil 14F. In the present embodiment, a width dimension AW of the negative active material layer 4A, 14A in the width direction WH is defined as AW=180 mm.

In the to-be-permeated electrode body 12, the pair of strip-shaped to-be-permeated separators 15 are formed of porous resin. As shown in FIG. 4, when being wound, the to-be-permeated separators 15 are laminated such that each to-be-permeated separator 15 is interposed between the to-be-permeated negative electrode plate 14 and the to-be-permeated positive electrode plate 13. The to-be-permeated negative electrode plate 14 and the negative electrode part 14N are slightly wider than the to-be-permeated positive electrode plate 13 and the positive electrode part 13P in the width direction WH. Furthermore, the negative electrode part 14N is disposed so as to cover the entire positive electrode part 13P in the width direction WH, that is, such that the negative active material layer 14A facing the positive active material layer 13A is present in any portions of the positive active material layer 13A. The to-be-permeated separator 15 is slightly wider than each of the negative electrode part 14N and the positive electrode part 13P in the width direction WH. Furthermore, each to-be-permeated separator 15 is disposed so as to cover the entire negative electrode part 14N and the entire positive electrode part 13P in the width direction WH, that is, such that each to-be-permeated separator 15 covering the positive active material layer 13A and the negative active material layer 14A is present in any portions of these layers.

The to-be-permeated electrode body 12 is connected to the positive terminal 8P and the negative terminal 8N and housed in the case 7, and the electrolytic solution 6 is injected into the case 7. Then, the electrolytic solution 6 permeates from an outer side XHO in the axial direction XH of the to-be-permeated electrode body 12, that is, from the one side XH1 and the other side XH2 toward the inner side of the to-be-permeated electrode body 12. Specifically, the electrolytic solution 6 permeates along the to-be-permeated positive electrode plate 13, the to-be-permeated negative electrode plate 14, and the to-be-permeated separators 15 from the one side WH1 and the other side WH2 (the upper side and the lower side in FIG. 4) in the width direction WH coaxial with the axial direction XH toward a center line ML in the width direction WH of the negative active material layer 14A, that is, toward an inner side WHI in the width direction WH.

However, as described above, when the electrolytic solution 6 permeates the to-be-permeated electrode body 12, the ethylene carbonate 6VE out of components of the organic solvents 6V has a slow permeation speed compared to those of the other solvents 6VL (in the present embodiment, DMC and EMC each having lower melting point than EC). Thus, regarding distances EL that the electrolytic solutions 6 travel toward the inner side WHI in the width direction WH with both peripheral edges 14AE1, 14AE2 in the width direction WH of the negative active material layer 14A of the to-be-permeated negative electrode plate 14 being starting points, it is considered that the larger the distance EL is, the lower the concentration of the ethylene carbonate 6VE at a leading portion of permeation toward the inner side WHI is. Thus, when the electrolytic solution 6 permeates to the center line ML indicated by a chain-dot line in FIG. 4, in the width direction WH of the negative active material layer 14A, and permeation of the electrolytic solution 6 over the entire to-be-permeated electrode body 12 is completed to form the electrode body 2 impregnated with the electrolytic solution 6 (e.g., at the time when a waiting time TT from start of liquid injection to completion of permeation of the electrolytic solution 6 elapses), it is considered that the concentration of the ethylene carbonate 6VE in the electrolytic solution 6 present near the center line ML of the electrolytic solution 6 which has permeated is relatively low compared to that of the electrolytic solution 6 positioned on the side outer in the width direction WH (that is, the upper or lower side in FIG. 4) than a portion near the center line ML.

The electrolytic solution 6 which permeates (proceeds) toward the inner side WHI in the width direction WH along the negative active material layer 14A has been described above. However, similarly, in the electrolytic solution 6 which permeates (proceeds) toward the inner side WHI in the width direction WH along the positive active material layer 13A of the to-be-permeated positive electrode plate 13 or the to-be-permeated separator 15, unevenness in the concentration of the ethylene carbonate 6VE in the electrolytic solution 6 occurs due to difference in the permeation speed. That is, when the electrolytic solution 6 is injected into the case 7 and is caused to permeate the to-be-permeated electrode body 12, the amount of the ethylene carbonate 6VE which has reached a portion near the center portion 2M in the axial direction XH in the electrode body 2 (see FIG. 3), which has been impregnated with the electrolytic solution 6, is likely to decrease.

In particular, as in the present embodiment, when the width dimension AW of the negative active material layers 4A, 14A of the electrode body 2 or the to-be-permeated electrode body 12 is not smaller than 180 mm (specifically, width dimension AW=180 mm in the present embodiment), until the electrolytic solutions 6 having permeated from the both peripheral edges 14AE1, 14AE2 of the negative active material layer 14A in the width direction WH reaches the center line ML, the electrolytic solutions 6 each needs to permeate (move) by the distance EL of 90 mm or larger along the negative active material layer 14A. Thus, due to a difference in permeation speed between the ethylene carbonate 6VE and the other solvent 6VL, the concentration of the ethylene carbonate 6VE in the electrolytic solution 6 present near the center line ML decreases and the area density of the ethylene carbonate 6VE present near the center line ML also decreases.

After the electrolytic solutions 6 having permeated from the both peripheral edges 14AE1, 14AE2 of the negative active material layer 14A toward the inner side WHI reach the portion near the center line ML and come into contact with each other, the permeation does not cause the electrolytic solution 6 to move further to the inner side WHI in the width direction WH. Thus, it is considered that unevenness in the concentration of the ethylene carbonate 6VE occurring between the electrolytic solution 6 present near the center line ML and the electrolytic solution 6 present on the side outer in the width direction WH (the upper or lower side in FIG. 4) than the center line ML, in the electrolytic solution 6 having permeated, is gradually eliminated by diffusion movement due to the concentration gradient of the ethylene carbonate 6VE. However, it is assumed that elimination of unevenness in the concentration takes more time (e.g., several days) than movement of the electrolytic solution 6 by permeation. Thus, it is difficult to wait for a long time before performing initial charging from the time when the electrolytic solution 6 has permeated the entire electrode body 2 to the time when unevenness in the concentration is eliminated.

Therefore, after the electrolytic solution 6 is injected into the case 7 and then the waiting time TT until completion of permeation of the electrolytic solution 6 elapses, if initial charging of the battery 1 is started just after the completion, the initial charging is to be performed in a state in which unevenness in the concentration of the ethylene carbonate 6VE in the electrode body 2 occurs.

Meanwhile, as described above, the ethylene carbonate 6VE contained in the electrolytic solution 6 is a raw material for forming the negative electrode SEI films 4AC on the peripheries of the negative active material particles 4AP which form the negative active material layer 4A. Thus, as described above, if the amount per unit area of the ethylene carbonate 6VE present near the center line ML of the negative active material layer 4A is small, the negative electrode SEI films derived from the ethylene carbonate as the negative electrode SEI films 4AC cannot be appropriately formed on the peripheries of the negative active material particles 4AP in a portion near the center line ML of the negative active material layer 4A, which tends to cause defects such as an increased resistance of the battery 1.

In the battery 1 of the present embodiment, as shown in FIG. 4, in the negative active material layer 14A of the to-be-permeated negative electrode plate 14 forming the to-be-permeated electrode body 12, a center portion 14AM in the width direction WH, in which the distance EL from each of the both peripheral edges 14AE1, 14AE2 is equal to or larger than an adjunct distance ELF (adjunct distance ELF=80 mm in the present embodiment), is a strip-shaped adjunct negative active material layer 14AF to which a film-forming material CS is added in advance. On the other hand, one side portion 14AS 1 on the one side WH1 in the width direction WH and the other side portion 14AS2 on the other side WH2 in the width direction WH are respectively strip-shaped non-inclusive negative active material layers 14AN1, 14AN2 which contain no film-forming material CS similar to the conventional one. In the present embodiment, an ethylene carbonate CS1 is used as the film-forming material CS. Accordingly, the to-be-permeated electrode body 12 is configured such that the film-forming material CS (ethylene carbonate CS 1) for forming the negative electrode SEI film 4AC in the negative active material layer 4Ais disposed in advance in the center portion 12M in the axial direction XH.

To form the negative active material layer 14A of the to-be-permeated negative electrode plate 14, as described below, the non-inclusive negative active material layers 14AN1, 14AN2 are formed of a non-inclusive negative electrode paste PAN which contains no film-forming material CS similar to the conventional one, and the adjunct negative active material layer 14AF is formed of an adjunct negative electrode paste PAF which contains the film-forming material CS and formed in the center portion 14AM in the width direction WH. In the present embodiment, as the non-inclusive negative electrode paste PAN, a mixture obtained by mixing 99 wt% of graphite particles and 1 wt% of a binder (CMC) with water as a solvent is used. In addition, as the adjunct negative electrode paste PAF, a mixture obtained by adding 5 wt% of the ethylene carbonate CS 1 as the film-forming material CS to the above-described non-inclusive negative electrode paste PAN is used.

Since the adjunct negative active material layer 14AF is formed in the center portion 14AM of the negative active material layer 14A, when the electrolytic solutions 6, which are caused to permeate from the both peripheral edges 14AE1, 14AE2 of the negative active material layer 14A toward the inner side WHI in the width direction WH, reach the adjunct negative active material layer 14AF, the electrolytic solutions 6 further permeate toward the center line ML while the film-forming material CS in the adjunct negative active material layer 14AF is dissolved in the electrolytic solutions 6. Thus, even in the electrode body 2 in which permeation of the electrolytic solution 6 is completed, the electrolytic solution 6 present near the center line ML of the negative active material layer 14A, that is, present in the center portion 14AM, has the decreased concentration of the ethylene carbonate 6VE derived from the electrolytic solution 6. However, the film-forming material CS (ethylene carbonate CS1) in the adjunct negative active material layer 14AF is added to the electrolytic solution 6 in the center portion 14AM.

Thus, as described above, even if an initial charging step is performed in the state in which the ethylene carbonate 6VE derived from the electrolytic solution 6 does not sufficiently reach the center portion 14AM, the film-forming material CS disposed in advance allows the negative electrode SEI films 4AC to be appropriately formed on the negative active material particles 4AP (see FIG. 2). In this manner, unevenness in formation of the negative electrode SEI film is inhibited in the negative active material layer 4A, and unevenness in resistance is inhibited in the negative active material layer 4A in the electrode body 2, thereby achieving production of the battery 1 in which increase in resistance is inhibited.

In particular, in the present embodiment, the ethylene carbonate CS1 is used as the film-forming material CS. That is, the ethylene carbonate CS1 as the film-forming material CS is disposed in advance in the center portion 14AM of the negative active material layer 14A which is short of the ethylene carbonate 6VE derived from the electrolytic solution 6. Thus, shortage in the ethylene carbonate is prevented everywhere in the negative active material layer 4A, and the negative electrode SEI film derived from the ethylene carbonate can be appropriately formed in the entire negative active material layer 4A.

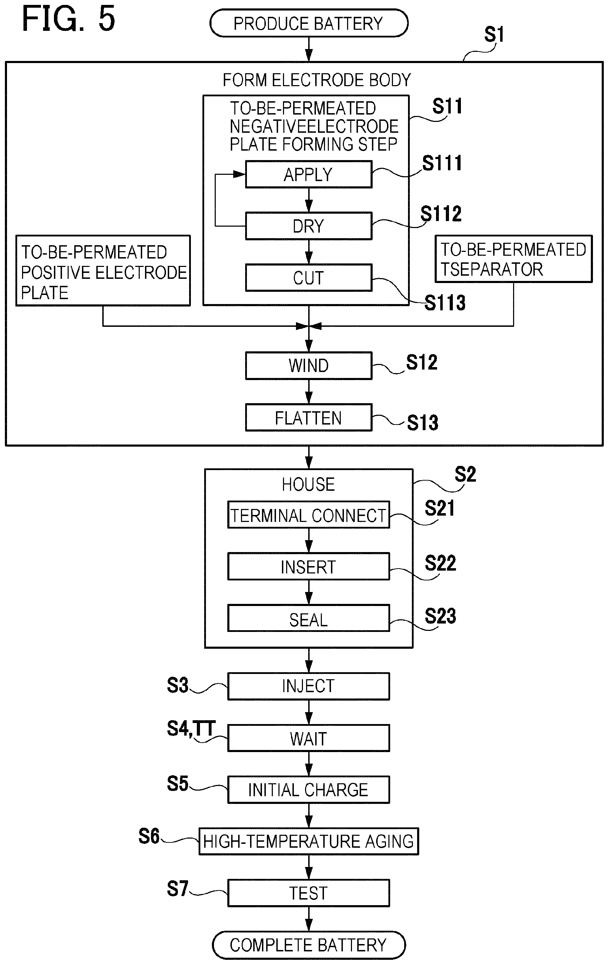

Next, production of the battery 1 will be described with reference to FIGs. 5 to 7. First, in a forming step S1 of an electrode body (one example of a step of forming a to-be-permeated electrode body), the wound to-be-permeated electrode body 12 in which the electrolytic solution 6 does not permeate is formed. Specifically, in a forming step S11 of a to-be-permeated negative electrode plate (one example of a forming step of an adjunct negative electrode plate), the to-be-permeated negative electrode plate 14 including the strip-shaped negative active material layer 14A is formed.

Further specifically, in the strip-shaped negative active material layer 14A, the center portion 14AM in the width direction WH is the strip-shaped adjunct negative active material layer 14AF containing the film-forming material CS, and the one side portion 14AS1 and the other side portion 14AS2 on an outer side WHO outer in the width direction WH than the adjunct negative active material layer 14AF are respectively the strip-shaped non-inclusive negative active material layers 14AN1, 14AN2 which contain no film-forming material CS. Thus, the to-be-permeated negative electrode plate 14 including such a negative active material layer 14A is formed (see FIG. 4). As described above, in the present embodiment, the ethylene carbonate CS1 is used as the film-forming material CS.

In the forming step S11 of the to-be-permeated negative electrode plate, the non-inclusive negative active material layers 14AN1, 14AN2 are formed by using the non-inclusive negative electrode paste PAN which contains the negative active material particles 14AP and the binder, but contains no film-forming material CS. Meanwhile, the adjunct negative active material layer 14AF is formed by using the adjunct negative electrode paste PAF which contains the negative active material particles 4AP and the film-forming material CS.

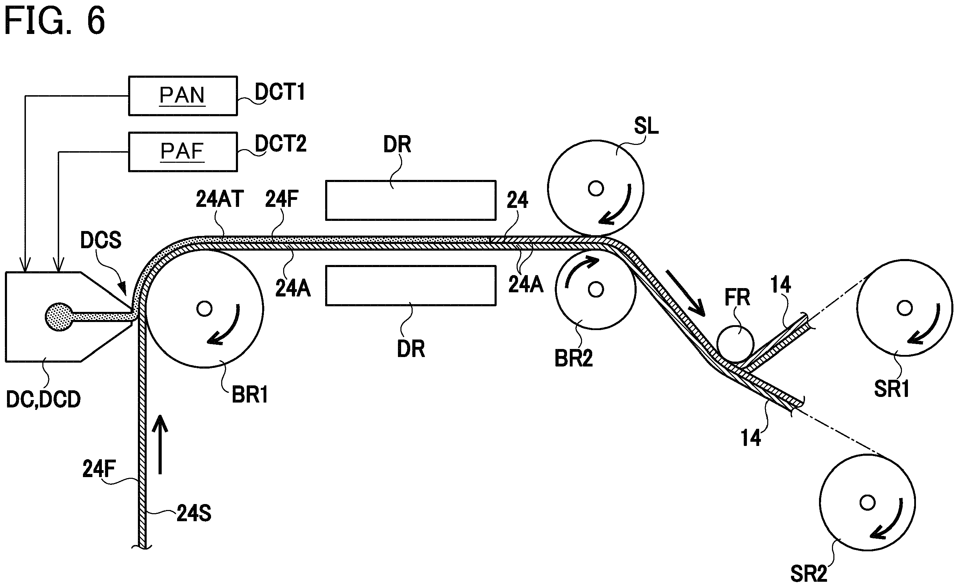

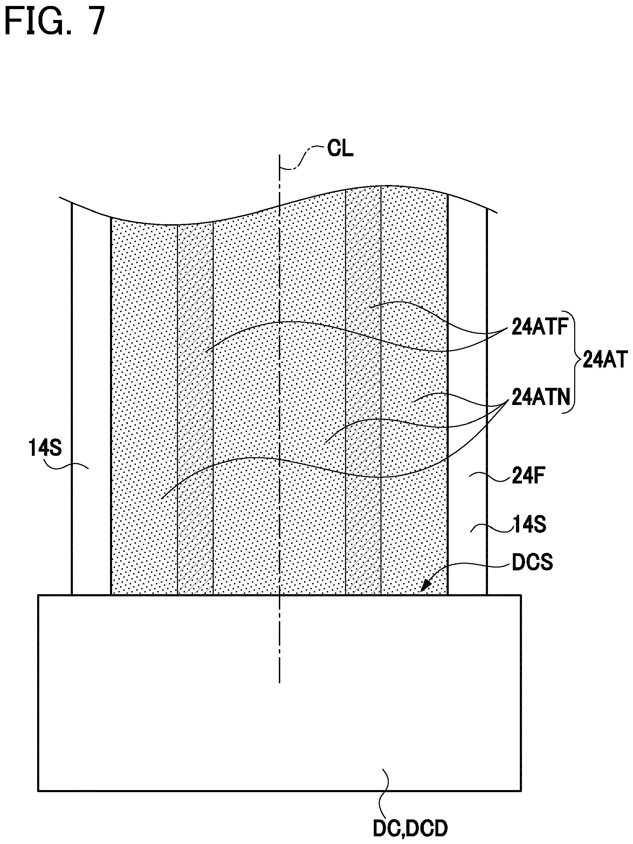

Specifically, in an applying step 5111, as shown in FIG. 6, a wide negative electrode paste layer 24AT is applied to a wide negative electrode foil 24F, which has a width twice as wide as the negative electrode foil 4F of the negative electrode plate 4 and is wound around a backup roll BR1, by using die coaters DC. Further specifically, the non-inclusive negative electrode paste PAN is stored in a storage tank DCT1 of the die coaters DC, and the adjunct negative electrode paste PAF is stored in a storage tank DCT2 of the die coaters DC. By using a die DCD in which a plurality of partitions (not shown) are provided, the non-inclusive negative electrode paste PAN supplied from the storage tank DCT1 and the adjunct negative electrode paste PAF supplied from the storage tank DCT2 are ejected so as to make a stripe shape through a slit DCS of the die DCD and applied to the wide negative electrode foil 24F wound around the backup roll BR1 (see FIG. 7). Specifically, the wide negative electrode paste layer 24AT having a width twice as wide as the negative active material layer 14A is applied to both sides of the wide negative electrode foil 24F having a width twice as wide as the negative electrode foil 14F, except for portions to be the current collecting parts 14S of the to-be-permeated negative electrode plate 14. The wide negative electrode paste layer 24AT is formed so as to be bilaterally symmetric with each other with a cutting center line CL indicated by a chain-dot line in FIG. 7 as the center, and is applied with a five-stripe pattern in which two adjunct negative electrode paste layers 24ATF are interposed alternately in three non-inclusive negative electrode paste layers 24ATN. As described next, after being dried and cut, the non-inclusive negative electrode paste layers 24ATN form the non-inclusive negative active material layers 14AN1, 14AN2 of the negative active material layers 14A. After being dried and cut, the adjunct negative electrode paste layers 24ATF form the adjunct negative active material layers 14AF.

Then, in a drying step S112, the wide negative electrode paste layer 24AT applied on the wide negative electrode foil 24F is dried in a drying furnace DR to form a wide negative active material layer 24A. The applying step S111 and the drying step S112 are performed on a front surface and a back surface of the wide negative electrode foil 24F in a repetitive manner to form the wide to-be-permeated negative electrode plate 24 in which the wide negative active material layers 24A are provided on both surfaces of the wide negative electrode foil 24F. FIG. 6 shows a state in which application and drying of the wide negative electrode paste layer 24AT are performed on a wide single-sided negative electrode plate 24S in which the wide negative active material layer 24A is provided on a single surface of the wide negative electrode foil 24F.

Further, in the cutting step S113, the wide to-be-permeated negative electrode plate 24, in which the wide negative active material layers 24A are provided on the both surfaces of the wide negative electrode foil 24F, is cut along the cutting center line CL (see FIG. 7) to form two strip-shaped to-be-permeated negative electrode plates 14. Then, the to-be-permeated negative electrode plates 14 are distributed by a distributing roll FR, and then are respectively wound around winding rolls SR1, SR2. In this manner, the to-be-permeated negative electrode plate 14 (see FIG. 4) is obtained by the forming step S11 of the to-be-permeated negative electrode plate.

Subsequently, in a winding step S12, the to-be-permeated negative electrode plate 14 is wound together with the to-be-permeated positive electrode plate 13 and the to-be-permeated separators 15, which are separately formed, to form a cylindrical wound electrode body (not shown). Further, in a flattening step S13, the cylindrical electrode body is pressed to form the plate-shaped flat wound to-be-permeated electrode body 12 (see FIG. 3). In this manner, the to-be-permeated electrode body 12 is obtained by the forming step S1 of the electrode body.

Then, the to-be-permeated electrode body 12 is housed into the case 7 in a housing step S2. Specifically, first, in a terminal connecting step S21, the positive current collecting part 12P of the to-be-permeated electrode body 12 is welded to the inside connection portion 8PI of the positive terminal 8P fixed to the lid 7L via the insulating member 9, and the negative current collecting part 12N is welded to the inside connection portion 8NI of the negative terminal 8N in the same manner, whereby the to-be-permeated electrode body 12 is fixed to the lid 7L via the positive terminal 8P and the negative terminal 8N (see FIG. 1).

In a subsequent inserting step S22, the to-be-permeated electrode body 12 is covered with a bag-shaped resin cover (not shown) formed of a resin film and then is inserted into the case body 7H, and the case body 7H is sealed with the lid 7L. Further, in a sealing step S23, the lid 7L is laser-welded over the entire periphery to be hermetically welded to the case body 7H and be sealed. In this manner, the to-be-permeated electrode body 12 is housed in the case 7 in the housing step S2.

Then, in a liquid injecting step S3, a predetermined amount of the electrolytic solution 6 is injected into the case 7 through the liquid inlet 7LH of the lid 7L. Accordingly, as described above, the electrolytic solution 6 is caused to permeate the to-be-permeated electrode body 12 in the case 7. In the liquid injection step S3, the electrolytic solution 6 is injected according to a predetermined liquid injection pattern. Alternatively, prior to liquid injection, the battery 1 in which the electrolytic solution 6 is not yet injected may be placed in a chamber, and the to-be-permeated electrode body 12 may be impregnated with the electrolytic solution 6 while the chamber is pressurized or depressurized.

In a waiting step S4, the process is suspended until the predetermined waiting time TT lapses since start of liquid injection. The waiting time TT is a time period from start of liquid injection until the electrolytic solution 6 permeates the entire to-be-permeated electrode body 12 (that is, until the electrode body has 2 been impregnated with the electrolytic solution 6), and this waiting time TT is obtained in advance by, for example, disassembling battery samples which are different in lapse of times since start of liquid injection and by observing the permeation states of the electrolytic solution 6.

After the waiting time TT elapses, the process proceeds to an initial charging step S5. In the initial charging step S5, a power source (not shown) is connected to the positive terminal 8P and the negative terminal 8N, and voltage is applied to the electrode body 2 of the battery 1 via the positive terminal 8P and the negative terminal 8N to perform initial charging. That is, voltage is applied between the positive electrode plate 3 and the negative electrode plate 4 of the electrode body 2 according to a predetermined initial charging pattern, whereby the negative electrode SEI film 4AC (see FIG. 2) is formed in the negative active material layer 4A of the negative electrode plate 4. In the present embodiment, initial charging is performed according to an initial charging pattern of 0.5C-CCCV charge (SOC 90%). Then, the liquid inlet 7LH is sealed with the liquid injection plug 7P.

As described above, in the battery 1 of the present embodiment, the adjunct negative active material layer 14AF is formed in the center portion 14AM of the negative active material layer 14A of the to-be-permeated negative electrode plate 14 of the to-be-permeated electrode body 12. Thus, in the electrode body 2 in which the electrolytic solution 6 has permeated the entire to-be-permeated electrode body 12 after elapse of the waiting time TT, an area density of ethylene carbonate present near the center line ML of the negative active material layer 4A of the negative electrode plate 4 can be prevented from decreasing. Thus, in the initial charging step S5, the negative electrode SEI films 4AC can be appropriately formed on the negative active material particles 4AP in any portions in the negative active material layer 4A.

Next, high-temperature aging in which the battery 1 is left for 20 hours under an environment of 60°C is performed in a high-temperature aging step S6, and the battery 1 is inspected in a testing step S7, whereby the battery 1 is completed.

### First and Second Comparative Embodiments

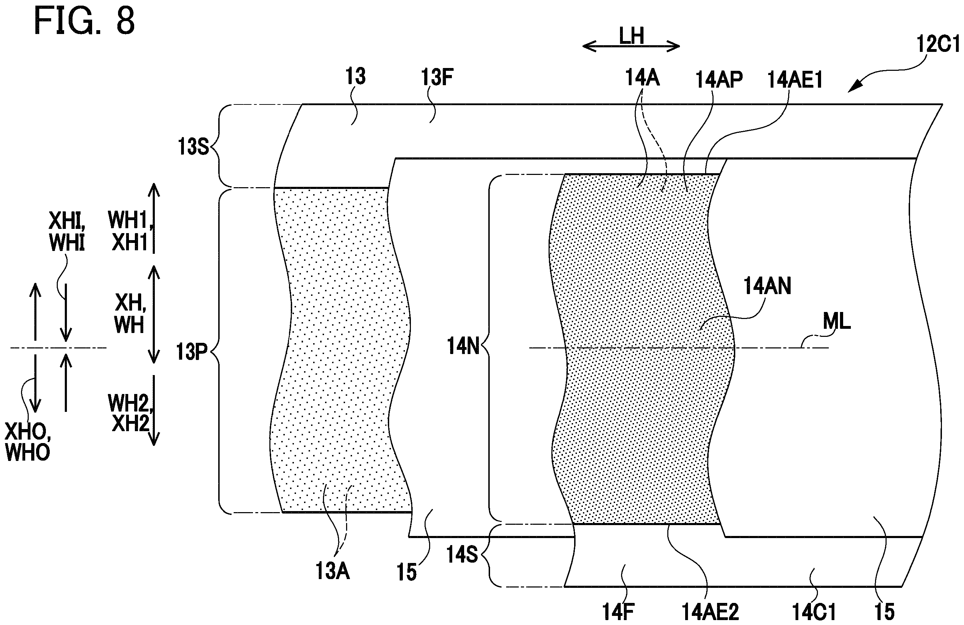

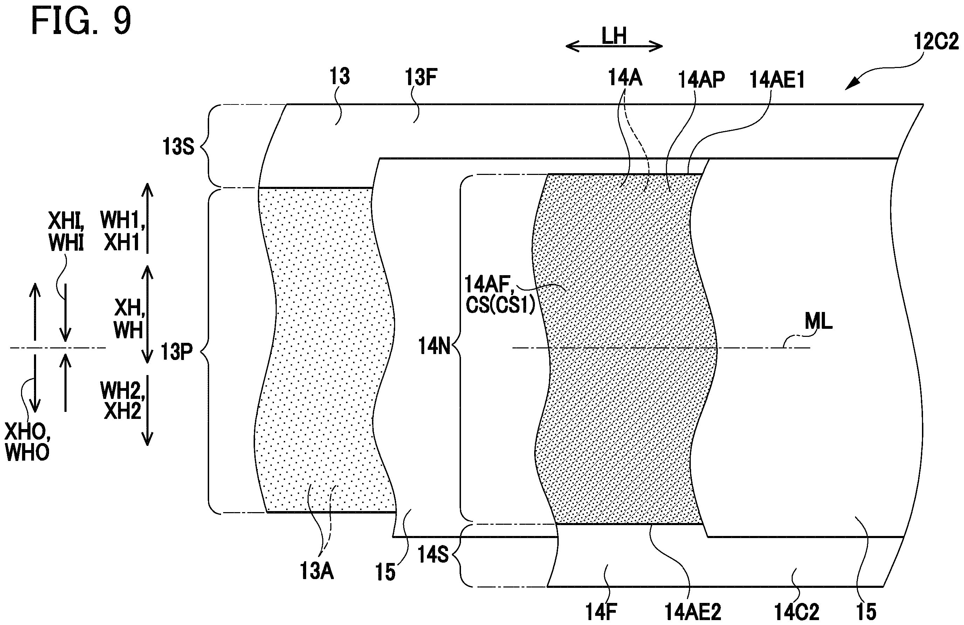

For comparison with the battery 1 according to the embodiment, batteries 1C1, 1C2 according to first and second comparative embodiments are produced, and examinations described below are performed. First, a method for producing the batteries 1C1, 1C2 according to the first and second comparative embodiments will be described with reference to FIGs. 8 and 9.

The battery 1C1 according to the first comparative embodiment is a battery which is the same as a conventional one. In the battery 1 of the embodiment, the to-be-permeated electrode body 12 is formed by using the to-be-permeated negative electrode plate 14 in which the adjunct negative active material layer 14AF is formed in the center portion 14AM of the negative active material layer 14A, and the to-be-permeated electrode body 12 is impregnated with the electrolytic solution 6. In contrast, in the battery 1C1 of the first comparative embodiment, as shown in FIG. 8, a to-be-permeated negative electrode plate 14C1 is formed in such a manner that the adjunct negative active material layer 14AF is not formed in the negative active material layer 14A and the entire negative active material layer 14A is the non-inclusive negative active material layer 14AN containing no film-forming material CS. A to-be-permeated electrode body 12C1 is formed by using this to-be-permeated negative electrode plate 14C1. The process is the same as that for the battery 1 of the first embodiment except for the above, and the initial charging step S5, the high-temperature aging step S6, and the like are performed in the same manner as in the above described embodiment, whereby the battery 1C1 of the first comparative embodiment is obtained.

On the other hand, the battery 1C2 according to the second comparative embodiment is a battery opposite to the battery 1C1 including the to-be-permeated negative electrode plate 14C1 of the first comparative embodiment. That is, as shown in FIG. 9, a to-be-permeated negative electrode plate 14C2 is formed in such a manner that the non-inclusive negative active material layer 14AN containing no film-forming material CS is not formed in the negative active material layer 14A and the entire negative active material layer 14A is the adjunct negative active material layer 14AF containing the film-forming material CS (ethylene carbonate CS1). A to-be-permeated electrode body 12C2 is formed by using this to-be-permeated negative electrode plate 14C2. The process is the same as that for the battery 1 of the first embodiment except for the above, and the initial charging step S5, the high-temperature aging step S6, and the like are performed in the same manner as in the above-described embodiment, whereby the battery 1C2 of the second comparative embodiment is obtained.

### Examination of Ethylene Carbonate Content

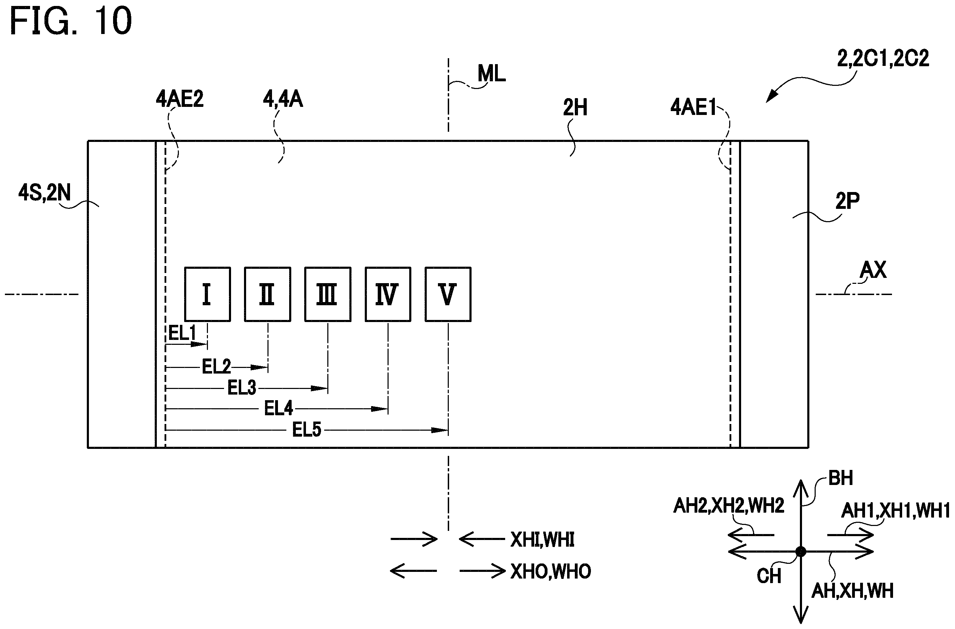

The produced batteries 1, 1C1, 1C2 are disassembled in a glove box under an inert atmosphere, and electrode bodies 2, 2C1, 2C2 are taken out, respectively. Further, the electrode bodies 2, 2C1, 2C2 are unwound, and negative electrode plates 4 thereof are taken out and allowed to stand and dried, respectively. In a middle portion (almost at the center in a longitudinal direction LH) of winding of each negative electrode plate 4, portions corresponding to examination positions I, II, III, IV, V in FIG. 10 are each segmented into a dimension of 20×20 mm, whereby 15 kinds of negative electrode samples in total for extraction are obtained. Each negative electrode sample for extraction is soaked in an extraction solvent to extract ethylene carbonate. Then, NMR measurement is performed on a reference liquid having a known concentration of ethylene carbonate and on each extract in order to calculate the ethylene carbonate content contained in the extract based on the ratio of detection intensity of ethylene carbonate in the reference liquid to that in the extract. Further, in each of the electrode bodies 2, 2C1, 2C2, the relative content (%) of EC is obtained in each of the examination positions I to V with the ethylene carbonate content obtained in the examination position I being defined as 100%.

As shown in FIG. 10, the examination positions I, II, III, IV, V are portions of the negative active material layer 4A of the negative electrode plate 4 which are formed in a flat plate-like shape in each of the electrode bodies 2, 2C1, 2C2, and are arranged in the axial direction XH and respectively located at distances EL1, EL2, EL3, EL4, EL5 (specifically, EL1=10 mm, EL2=30 mm, EL3=50 mm, EL4=70 mm, EL5=90 mm in the present embodiment and the like) from a peripheral edge 4AE2 (see FIG. 4) on a side of the current collecting part 4S, which is to become the negative current collecting part 2N, toward an inner side XHI in the axial direction XH (i.e., inner side WHI in the width direction WH). The examination position V is a position on the center line ML of the negative active material layer 4A. That is, the distance EL5 has a half length of the width dimension AW (AW=180 mm in the present embodiment and the like) in the width direction WH of the negative active material layer 4A.

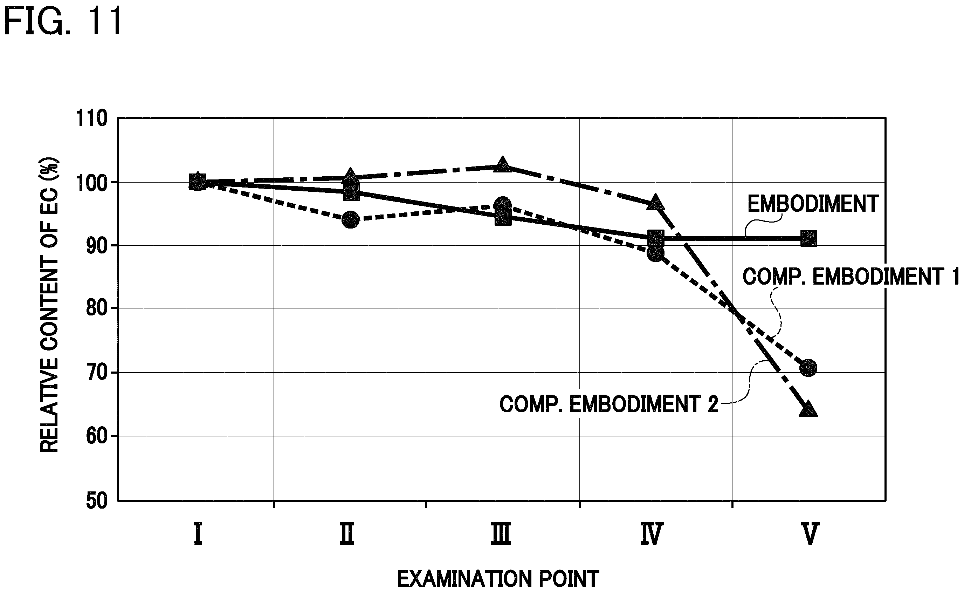

A result of the above examination is indicated in a graph in FIG. 11. In the electrode body 2C1 of the battery 1C1 of the first comparative embodiment indicated by a thick broken line, the ethylene carbonate 6VE content gradually decreases from the examination position I toward the examination position IV, that is, decreases as it approaches the inner side XHI from the peripheral edge 4AE2 in the axial direction XH. However, it is found that the ethylene carbonate 6VE content largely decreases that is, decreases by approximately 30% as compared to that in the examination position I in the first comparative embodiment, in the examination position V, corresponding to the center portion 2M (see FIG. 3) in the axial direction XH of the electrode body 2C1.

The above result is considered to be due to the following reason. As described above, the permeation speed of the ethylene carbonate 6VE contained in the electrolytic solution 6 is slower than those of the other solvents 6VL (specifically, DMC, EMC). Thus, it is considered that the larger the distance EL from the peripheral edge 4AE2 toward the examination position V is, in the electrolytic solution 6 permeating the electrode body 2C1, the lower the concentration of the ethylene carbonate 6VE is in the electrolytic solution 6 present at a leading end portion of permeation. In particular, when the distance EL exceeds 80 mm, the concentration of the ethylene carbonate 6VE largely decreases. Moreover, in a portion near the examination position V located on the center line ML of the negative active material layer 4A, that is, in the center portion 2M of the electrode body 2C1, the electrolytic solutions 6 having permeated from the both peripheral edges 4AE1, 4AE2 (see FIG. 8) of the negative active material layer 4A to the inner side WHI in the width direction WH (the inner side XHI in the axial direction XH) come into contact with each other, and the permeation thereof stops. Thus, the content (area density) of the ethylene carbonate 6VE which reaches the center portion 2M is likely to remain small.

On the other hand, in the electrode body 2C2 of the battery 1C2 of the second comparative embodiment indicated by a thick chain-dot line, the ethylene carbonate content is maintained at a high value around 100% from the examination position I to the examination position IV. In particular, in the examination positions II, III, the ethylene carbonate content is slightly higher than that in the examination position I near the peripheral edge 4AE2 on the outer side WHO in the width direction WH. However, the ethylene carbonate content slightly decreases in the examination position IV. Furthermore, it is found that the ethylene carbonate content largely decreases, by approximately 35% as compared to that in the examination position I in the second comparative embodiment, in the examination position V corresponding to the center portion 2M (see FIG. 3) in the axial direction XH of the electrode body 2C1.

The above result is considered to be due to the following reason. In the electrode body 2C2 of the battery 1C2 of the second comparative embodiment, the to-be-permeated negative electrode plate 14C2, in which the entire negative active material layer 14A is the adjunct negative active material layer 14AF containing the film-forming material CS (specifically, ethylene carbonate CS1), is used. Thus, in a range of the examination positions I to III in which the distances EL from the peripheral edge 4AE2 are relatively small, the ethylene carbonate CS1 derived from the adjunct negative active material layer 14AF is dissolved in the electrolytic solution 6, and thus it can compensate for decrease in the concentration (see the graph of the first comparative embodiment) due to the slow permeation speed of the ethylene carbonate 6VE contained in the electrolytic solution 6. As a result of this, it is considered that the concentration of the ethylene carbonate is rather increased as the electrolytic solution 6 permeates.

However, as described above, the ethylene carbonate dissolved in the electrolytic solution 6 has a slow permeation speed and also has a high viscosity as compared to those of the other solvents 6VL (specifically, DMC, EMC). Thus, when the concentration of the ethylene carbonate dissolved in the electrolytic solution 6 is increased in portions near the examination positions II, III, the permeation speed of the ethylene carbonate sharply decreases due to the increased viscosity thereof, and the concentration of the ethylene carbonate in the electrolytic solution 6 reaching the examination position V largely decreases. Thus, it is assumed that, although the ethylene carbonate CS1 derived from the adjunct negative active material layer 14AF compensates for decrease in a portion near the examination position V, significant decrease in the ethylene carbonate content in the examination position V, that is, in the center portion 2M, cannot be sufficiently compensated for.

In contrast, in the battery 1 (electrode body 2) of the present embodiment indicated by a thick solid line, in the examination positions I to IV, roughly similar to the battery 1C1 of the first comparative embodiment, the ethylene carbonate content gradually decreases from the examination position I toward the examination position IV, that is, as it approaches the inner side XHI from the peripheral edge 4AE2 in the axial direction XH. However, unlike the battery 1C1 of the first comparative embodiment, in the battery 1 of the present embodiment, the ethylene carbonate content in the examination position V is almost the same as that in the examination position IV. That is, in the electrode body 2 of the battery 1 of the present embodiment, the ethylene carbonate content is inhibited from decreasing in the center portion 2M (see FIG. 3) in the axial direction XH. Specifically, in the present embodiment, the content in the examination position V decreases only by approximately 10% or lower as compared to that in the examination position I.

The above result is considered to be due to the following reason. In the electrode body 2 of the battery 1 of the present embodiment, only the center portion 14AM having the distance EL including the examination position V of 80 mm or larger is formed with the adjunct negative active material layer 14AF which contains the film forming material CS (specifically, ethylene carbonate CS1), and the to-be-permeated negative electrode plate 14 formed with the adjunct negative active material layer 14AF is used (see FIG. 4). Thus, it is considered that the concentration decreases due to the slow permeation speed of the ethylene carbonate 6VE derived from the electrolytic solution 6 in a range of examination positions I to IV as in the first comparative embodiment.

However, as described above, when the permeated electrolytic solution 6 reaches the adjunct negative active material layer 14AF in the center portion 14AM of the negative active material layer 14A, the ethylene carbonate CS1 derived from the adjunct negative active material layer 14AF is dissolved in the electrolytic solution 6 and supplied. Accordingly, it is considered that the ethylene carbonate content in the examination position V can be maintained at almost the same level as that in the examination position IV.

### Examination of IV Resistance Value

To investigate the effect on battery characteristics due to a difference in the concentration of the ethylene carbonate, the following examination is also performed. The produced batteries 1, 1C1, 1C2 are put into an SOC 50% charge state and are disassembled in a glove box under the inert atmosphere, and the electrode bodies 2, 2C1, 2C2 thereof are taken out, respectively. Further, the electrode bodies 2, 2C1, 2C2 are unwound. In middle portions of winding, in a positive electrode plate, a negative electrode plate facing the positive electrode plate, and a separator sandwiched therebetween, portions corresponding to the examination positions I, III, V in FIG. 10 are each segmented in a dimension of 20×20 mm, whereby nine kinds of samples in total, each of which includes a small positive electrode plate, a small negative electrode plate, and a small separator for a small cell, are obtained. These samples are washed with EMC and dried. The small separator was sandwiched between the small positive electrode plate and the small negative electrode plate to be laminated together, and this laminated plates and separators are surrounded with a laminate film. An electrolytic solution 6 is newly injected and sealing is performed, whereby a new small cell (not shown) is formed.

A constant-current discharge in which the value of a current A is made to correspond to discharge rates of 0.2C, 0.5C, 1C, 2C is performed on the small cells of nine kinds in total respectively corresponding to the examination positions I, III, V of the electrode bodies 2, 2C1, 2C2 under an environment at 25°C, whereby a voltage drop amount ΔV of each cell at the point of time when 10 seconds passed is obtained. The obtained data is plotted in a graph representing the current A on the X axis and the voltage drop amount ΔV on the Y axis, and the inclination of an approximate straight line represents a value of IV resistance, which is calculated as IV resistance=voltage drop amount ΔV/current A, of each small cell. Further, in each embodiment, a relative IV resistance value of the small cell corresponding to each of the examination positions I, III, V is obtained with the obtained IV resistance value of the small cell of the examination position I being defined as 100%.

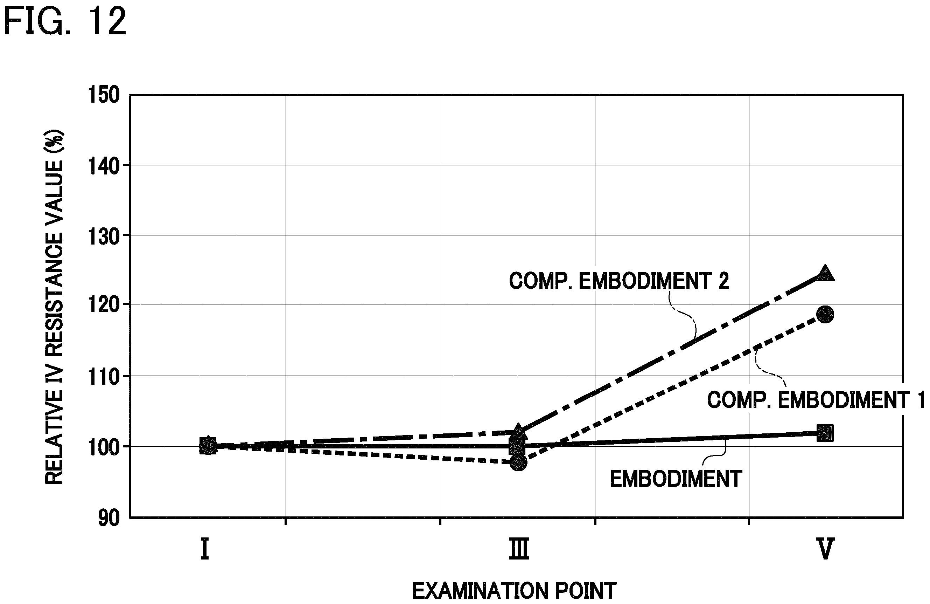

A result of the above examination is indicated in a graph in FIG. 12. Out of the small cells of the electrode body 2C1 of the battery 1C1 of the first comparative embodiment indicated by a thick broken line, the small cells corresponding to the examination positions I, III have almost the same relative IV resistance value. However, it is found that the relative IV resistance value of the small cell corresponding to the examination position V is largely increased (increased by approximately 18% as compared to that of the examination position I in the first comparative embodiment) compared to those of the small cells corresponding to the examination positions I, III.

The above result is considered to be due to the following reason. As described above, the ethylene carbonate content in the examination positions I to III of the electrode body 2C1 of the battery 1C1 of the first comparative embodiment does not largely change (see FIG. 11). Specifically, the content in the examination positions II, III decreases only by 7% as compared to that in the examination position I. Thus, when initial charging is performed on the battery 1C1 of the first comparative embodiment in the initial charging step S5, the negative electrode SEI films 4AC derived from the ethylene carbonate are appropriately formed on the negative active material particles 4AP in portions near the examination positions I, III of the negative active material layer 4A of the negative electrode plate 4. Accordingly, it is considered that the relative IV resistance values of the small cells, in which the small positive electrode plates, the small negative electrode plates, and the small separators corresponding to the examination positions I, III are respectively used, are almost the same with each other.

However, as described above, the ethylene carbonate content largely decreases by 28% in the examination position V of the electrode body 2C1. Thus, the negative electrode SEI films 4AC derived from the ethylene carbonate cannot be sufficiently formed on the negative active material particles 4AP in a portion near the examination position V, that is, near the center line ML (see FIG. 10) of the negative active material layer 4A of the negative electrode plate 4 after initial charging. Thus, it is considered that the relative IV resistance value of the small cell, in which the small positive electrode plate, the small negative electrode plate, and the small separator corresponding to the examination position V are used, is increased by 18% as compared to that of the small cell corresponding to the examination position I. Thus, it is found that the IV resistance value is increased locally in the center portion 2M in the electrode body 2C1 of the battery 1C1 of the first comparative embodiment, and the IV resistance value of the entire electrode body 2C1 is also increased.

In addition, also in the electrode body 2C2 of the battery 1C2 of the second comparative embodiment indicated by a thick chain-dot line, the small cells corresponding to the examination positions I, III have almost the same relative IV resistance value. However, the relative IV resistance value of the small cell corresponding to the examination position V is largely increased (namely, increased by approximately 24% as compared to that corresponding to the examination position I in the second comparative embodiment) compared to the small cells corresponding to the examination positions I, III.

The above result is considered to be due to the following reason. As described above, the ethylene carbonate content in the electrolytic solution 6 hardly changes in the examination positions I to III of the electrode body 2C2 of the battery 1C2 in the second comparative embodiment (see FIG. 11). Thus, when initial charging is performed on the battery 1C2 of the second comparative embodiment in the initial charging step S5, the negative electrode SEI films 4AC derived from the ethylene carbonate are appropriately formed on the negative active material particles 4AP in portions near the examination positions I, III of the negative active material layer 4A of the negative electrode plate 4. Accordingly, it is considered that the relative IV resistance values of the small cells, in which the small positive electrode plates, the small negative electrode plates, and the small separators corresponding to the examination positions I, III are respectively used, are almost the same with each other.

However, as described above, the ethylene carbonate content largely decreases by specifically 36% in the examination position V of the electrode body 2C2. Thus, the negative electrode SEI films 4AC derived from the ethylene carbonate cannot be formed sufficiently on the negative active material particles 4AP in a portion near the examination position V, that is, near the center line ML (see FIG. 10) of the negative active material layer 4A of the negative electrode plate 4 after the initial charging. Accordingly, it is considered that the relative IV resistance value of the small cell, in which the small positive electrode plate, the small negative electrode plate, and the small separator corresponding to the examination position V are used, is increased by 24% as compared to that of the small cell corresponding to the examination position I. Thus, it is found that the IV resistance value is also increased locally in the center portion 2M in the electrode body 2C2 of the battery 1C2 of the second comparative embodiment, and the IV resistance value of the entire electrode body 2C2 is also increased.

In contrast, the relative IV resistance values in the examination positions I, III, V do not largely change in the battery 1 (electrode body 2) of the present embodiment indicated by a thick solid line.

The above result is considered to be due to the following reason. As described above, in the electrode body 2 of the battery 1 of the present embodiment, the ethylene carbonate content in the electrolytic solution 6 hardly decreases not only in the examination positions II to IV but also in the examination position V as compared to that in the examination position I (see FIG. 11). Specifically, the content of the examination position V decreases only by 9% as compared to that of the examination position I. Thus, when initial charging is performed on the battery 1 of the present embodiment in the initial charging step S5, the negative electrode SEI films 4AC derived from the ethylene carbonate can be appropriately formed on the negative active material particles 4AP not only in portions near the examination positions I, III but also in a portion near the examination position V of the negative active material layer 4A of the negative electrode plate 4. Thus, it is considered that the relative IV resistance values of the small cells, in which the small positive electrode plates, the small negative electrode plates, and the small separators corresponding to the examination positions I, III, V are respectively used, are almost the same with each other. Thus, it is found that, in the electrode body 2 of the battery 1 of the present embodiment, the negative electrode SEI film can be inhibited from being formed unevenly in the negative active material layer 4A of the wound electrode body 2, the IV resistance value is not increased locally in the center portion 2M, and the IV resistance value of the entire electrode body 2 can also be inhibited from being increased. That is, it is found that the IV resistance of the battery 1 of the present embodiment is lower than those of the batteries 1C1, 1C2 of the first and second comparative embodiments.

While the present invention has been described above based on the embodiments, it should be understood that the present invention is not limited to the embodiments but can be applied with modifications appropriately made thereto without departing from the scope of the gist of the present invention. For example, in the embodiment, the adjunct negative electrode paste PAF containing the film-forming material CS and the non-inclusive negative electrode paste PAN similar to the conventional one are prepared and applied to the wide negative electrode foil 24F with the die coater DC at one stroke to form the adjunct negative electrode paste layer 24ATF and the non-inclusive negative electrode paste layer 24ATN. Then, the wide negative electrode foil 24F is dried and cut, thereby forming the non-permeated negative electrode plate 14 including the adjunct negative active material layer 14AF and the non-inclusive negative active material layers 14AN1, 14AN2.

Alternatively, first, the adjunct negative electrode paste PAF may be applied to the wide negative electrode foil 24F to form the adjunct negative electrode paste layer 24ATF, then the non-inclusive negative electrode paste PAN may be applied to the wide negative electrode foil 24F to form the non-inclusive negative electrode paste layer 24ATN, and the wide negative electrode foil 24F may be dried and cut. Thus, the to-be-permeated negative electrode plate 14 including the adjunct negative active material layer 14AF and the non-inclusive negative active material layers 14AN1, 14AN2 may be formed.

Meanwhile, the non-inclusive negative electrode paste PAN may be applied to the wide negative electrode foil 24F to form the non-inclusive negative electrode paste layer 24ATN, then the adjunct negative electrode paste PAF may be applied to the wide negative electrode foil 24F to form the adjunct negative electrode paste layer 24ATF, and the wide negative electrode foil 24F may be dried and cut. Thus, the non-permeated negative electrode plate 14 may be formed.

Alternatively, only the non-inclusive negative electrode paste PAN similar to the conventional one may be applied to the wide negative electrode foil 24F and dried to form the non-inclusive negative active material layer, then a solution such as water, alcohol, or an organic solvent containing the film-forming material CS, that is separately prepared, may be applied to a strip-shaped portion which is to become the center portion 14AM of the negative active material layer 14A, and the wide negative electrode foil 24F is dried and cut. Thus, the to-be-permeated negative electrode plate 14 may be formed.

Still alternatively, after only the non-inclusive negative electrode paste PAN has been applied, a solution containing the film-forming material CS may be applied before drying or in a semidry state, and may be dried together with the non-inclusive negative electrode paste PAN, and then the wide negative electrode foil 24F may be cut, and thus the to-be-permeated negative electrode plate 14 may be formed.

As one example, in the embodiment, the strip-shaped adjunct negative active material layer 14AF containing the film-forming material CS is formed in the center portion 14AM in the width direction WH of the negative active material layer 14A of the to-be-permeated negative electrode plate 14 forming the to-be-permeated electrode body 12.

In contrast, a strip-shaped adjunct layer containing the film-forming material CS may be formed in the center portion in the width direction WH of the to-be-permeated separator 15 forming the to-be-permeated electrode body 12, that is, a portion facing the center portion 14AM in the width direction WH of the negative active material layer 14A. Such a strip-shaped adjunct layer may be formed by applying the above-described solution containing the film-forming material CS to the to-be-permeated separator 15.

In addition, a strip-shaped adjunct positive active material layer containing the film-forming material CS may be formed in the center portion in the width direction WH of the positive active material layer 13A of the to-be-permeated positive electrode plate 13 forming the to-be-permeated electrode body 12.

Furthermore, two or all of the to-be-permeated negative electrode plate 14, the to-be-permeated separator 15, and the to-be-permeated positive electrode plate 13, each of which contains the film-forming material CS, may be combined to form the to-be-permeated electrode body 12.

### Reference Signs List

1,1C1,1C2 Battery (Power storage device)
2,2C1,2C2 Electrode body
2M Center portion
3 Positive electrode plate
4 Negative electrode plate
4A Negative active material layer
AW Width dimension (of the negative active material layer)
4AE1,4AE2 Peripheral edge (in the width direction)
4AP Negative active material particles
4AC Negative electrode SEI films
5 Separator
6 Electrolytic solution
6V Organic solvent
6VE Ethylene carbonate
6VL Another solvent
7 Case
12,12C1,12C2 To-be-permeated electrode body
12M Center portion
13 To-be-permeated positive electrode plate
14 To-be permeated negative electrode plate (Adjunct negative electrode plate)
14C1,14C2 To-be-permeated negative electrode plate
14N Negative electrode part
14A Negative active material layer
14AE1,14AE2 Peripheral edge (in a width direction)
ML Center line
14A Center portion
14AS1 One side portion (Peripheral edge side portion)
14AS2 The other side portion (Peripheral edge side portion)
CS Film-forming material
CS1 Ethylene carbonate
EL Distance
14AF Adjunct negative active material layer
14AN1,14AN2,14AN Non-inclusive negative active material layer
14AP Negative active material particles
PAF Adjunct negative electrode paste
PAN Non-inclusive negative electrode paste
AX Winding axis
XH Axial direction
XH1 One side
XH2 The other side
XHI Inner side
XHO Outer side
WH Width direction
WH1 One side
WH2 The other side
WHI Inner side
WHO Outer side
S1 Forming step of an electrode body (Forming step of a to-be-permeated electrode body)
S2 Housing step
S3 Injecting step
S4 Waiting step
TT Waiting time
S5 Initial charging step

## Claims

1. A method for producing a power storage device (1), the power storage device (1) comprising:
an electrolytic solution (6) which contains ethylene carbonate (6VE) and a solvent (6VL) having a lower melting point than that of ethylene carbonate (6VE);
an electrode body (2) of a wound shape in which the electrolytic solution (6) permeates to the inside, the electrode body (2) including
a strip-shaped positive electrode plate (3),
a strip-shaped negative electrode plate (4) including a strip-shaped negative active material layer (4A), and
strip-shaped separators (5); and
a case (7) housing the electrode body (2) and the electrolytic solution (6), the electrode body (2) including the negative active material layer (4A) having a width dimension (AW) of 180 mm or larger,
the method comprising:
forming (S 1) a to-be-permeated electrode body (12) of a wound shape, in which the electrolytic solution (6) does not permeate;
housing (S2) the to-be-permeated electrode body (12) into the case (7);
injecting (S3) the electrolytic solution (6) into the case (7) housing the to-be-permeated electrode body (12);
waiting (S4) for an elapse of a predetermined waiting time (TT) during which the electrolytic solution (6) permeates the entire to-be-permeated electrode body (12) after the injecting (S3); and
performing initial charging (S5) for forming a negative electrode SEI film (4AC) in the negative active material layer (4A) after the waiting (S4), wherein
the forming (S1) of the to-be-permeated electrode body (12) is forming the to-be-permeated electrode body (12) in which a film-forming material (CS) for forming the negative electrode SEI film (4AC) in the negative active material layer (4A) is disposed in advance in a center portion (12M) in an axial direction (XH) of the to-be-permeated electrode body (12).

2. The method for producing the power storage device (1) according to claim 1, wherein
the forming (S1) of the to-be-permeated electrode body (12) includes forming (S11) an adjunct negative electrode plate (14), in which,
in the strip-shaped negative active material layer (14A), a center portion (14AM) in a width direction (WH) is a strip-shaped adjunct negative active material layer (14AF) containing the film-forming material (CS), and peripheral edge side portions (14AS1, 14AS2) on both sides in the width direction (WH) are respectively strip-shaped non-inclusive negative active material layers (14AN1, 14AN2) containing no film-forming material (CS).

3. The method for producing the power storage device (1) according to claim 2, wherein
in the forming (S11) of the adjunct negative electrode plate (14),
a non-inclusive negative electrode paste (PAN), which contains no film-forming material (CS) but contains negative active material particles (14AP), is used to form the non-inclusive negative active material layer (14AN1, 14AN2), and
an adjunct negative electrode paste (PAF), which contains the negative active material particles (14AP) and the film-forming material (CS), is used to form the adjunct negative active material layer (14AF).

4. The method for producing the power storage device (1) according to claim 2 or 3, wherein
in the forming (S11) of the adjunct negative electrode plate (14),
the center portion (14AM) away from each of both peripheral edges (14AE1, 14AE2) in the width direction (WH) of the strip-shaped negative active material layer (14A) by 80 mm or larger is the adjunct negative active material layer (14AF).

5. The method for producing the power storage device (1) according to any one of claims 1 to 4, wherein the film-forming material (CS) is ethylene carbonate (CS1).
